# EUROPEAN PATENT APPLICATION

(11) **EP 2 383 837 A1**
(43) Date of publication of application: **02.11.2011**
(21) Application number: 09838737.6
(22) Date of filing: 24.11.2009
(51) Int. Cl.: H01Q 1/24, H01Q 1/12, H04M 1/02

(54) **MOBILE TERMINAL**

(30) Priority: 26.01.2009 JP 2009014524
(71) Applicant: Panasonic Corporation, Kadoma-shi Osaka 571-8501 (JP)
(72) Inventor: KOUNO, Kazunori, Osaka 540-6207 (JP)
(74) Representative: Grünecker, Kinkeldey, Stockmair & Schwanhäusser
(86) International application number: PCT/JP2009/006321
(87) International publication number: WO 2010/084543

(57) **Abstract**

A mobile terminal designed to enable an antenna stored in the housing to be easily taken out. In this mobile terminal, the antenna (104) comprises an antenna base part (201) and an antenna extending part (202) which extends from the antenna base (201). A first antenna storing area (105) is provided in the first housing (101) and stores the antenna base (201). A second antenna storing area (106) is provided in the first housing (101) and stores the antenna extending part (202). A cavity (107) is provided between the first antenna storing area (105) and the second antenna storing area (106) of the first housing (101).

## Description

### Technical Field

The present invention relates to a mobile terminal, and more particularly to a mobile terminal that stores an antenna in a housing in a folded state.

### Background Art

Conventionally, a mobile terminal is known that enables an antenna to be stored in a housing in a folded state (see Non-Patent Literature 1, for example). With this kind of mobile terminal, the antenna is taken out of the housing for use in digital broadcast reception or the like. Also, with this kind of mobile terminal, the provision of a cut-out section communicating between the surface of the housing and an antenna storing section is known. By this means, when the antenna is to be used, a user can easily take out the antenna stored in the housing by inserting a finger in the cut-out section provided in the housing and lifting up the antenna.

### Citation List

### Non-Patent Literature

### NPL 1

Mobile Watch Editorial Department, New Mobile Products Showcase, NTT Docomo S903iTV, [online], [December 18, 2008 search], Internet <http://k-tai.impress.co.jp/cda/article/showcase_top/36072.htm>

### Summary of Invention

### Technical Problem

However, with a current apparatus, there are problems such as a loss of design quality due to the provision of a cut-out section in the surface of the housing.

It is an object of the present invention to provide a mobile terminal that enables an antenna stored in the housing to be taken out easily.

### Solution to Problem

A mobile terminal of the present invention employs a configuration having: a housing; an antenna having an antenna base section and an antenna extending section that extends from the antenna base section; a first antenna storing section that is provided in the housing and stores the antenna base section; a second antenna storing section that is provided in the housing and stores the antenna extending section; and a cavity section that is provided between the first antenna storing section and the second antenna storing section of the housing.

Also, a mobile terminal of the present invention employs a configuration having: a housing; an antenna having a hinge section on a base part; and an antenna storing section that is provided in the housing and stores the antenna folded from the hinge section; wherein a recess is provided in the vicinity of the hinge section of a bottom surface of the antenna storing section.

### Advantageous Effects of Invention

The present invention enables an antenna stored in the housing to be taken out easily.

### Brief Description of Drawings

FIG. 1 is a perspective view of the principal parts of a mobile terminal when the antenna is stored according to an embodiment of the present invention;
FIG.2 is a cross-sectional view through line A-A of FIG. 1;
FIG.3 is a perspective view of the principal parts of a mobile terminal when the antenna is taken out according to an embodiment of the present invention;
FIG.4 is a cross-sectional view through line B-B of FIG.3;
FIG.5 is a perspective view of the principal parts of a mobile terminal when the antenna is used according to an embodiment of the present invention; and
FIG.6 is a cross-sectional view through line C-C of FIG.5.

### Description of Embodiments

Now, an embodiment of the present invention will be described in detail with reference to the accompanying drawings.

### (Embodiment)

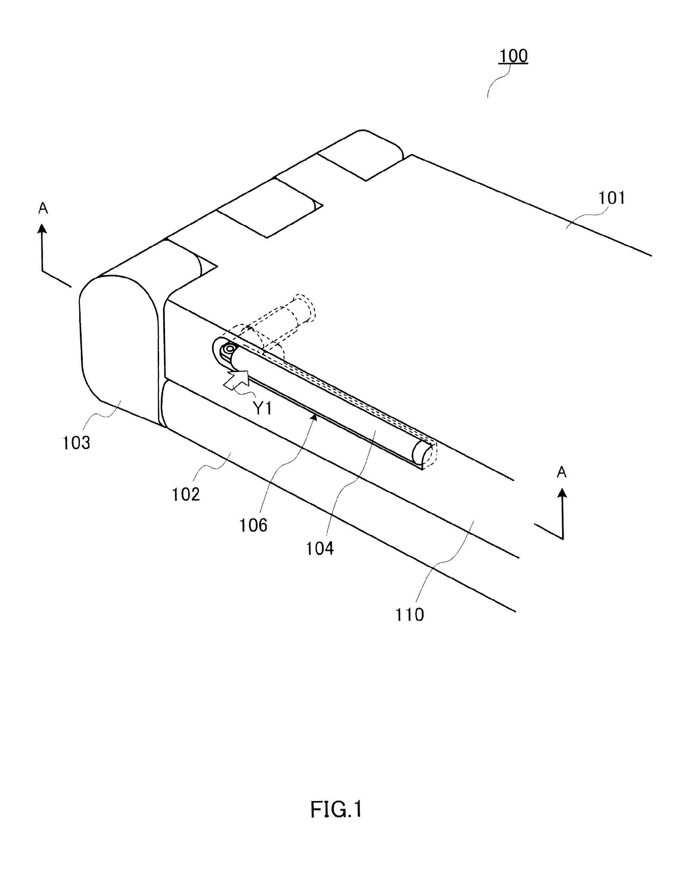

FIG.1 is a perspective view of the principal parts of mobile terminal 100 when the antenna is stored according to an embodiment of the present invention.

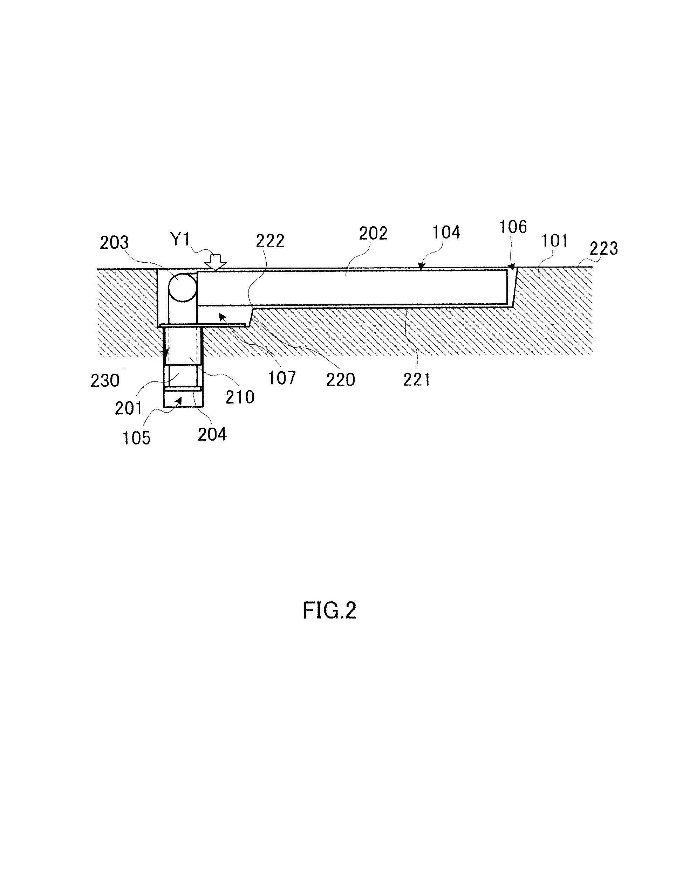

FIG.2 is a cross-sectional view through line A-A of FIG.1.

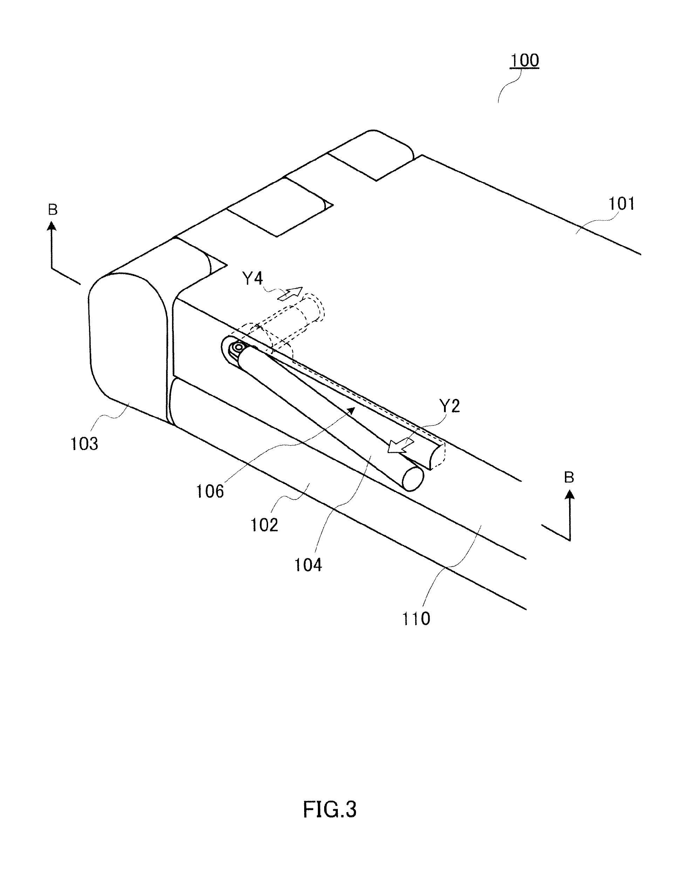

FIG.3 is a perspective view of the principal parts of mobile terminal 100 when the antenna is taken out according to an embodiment of the present invention.

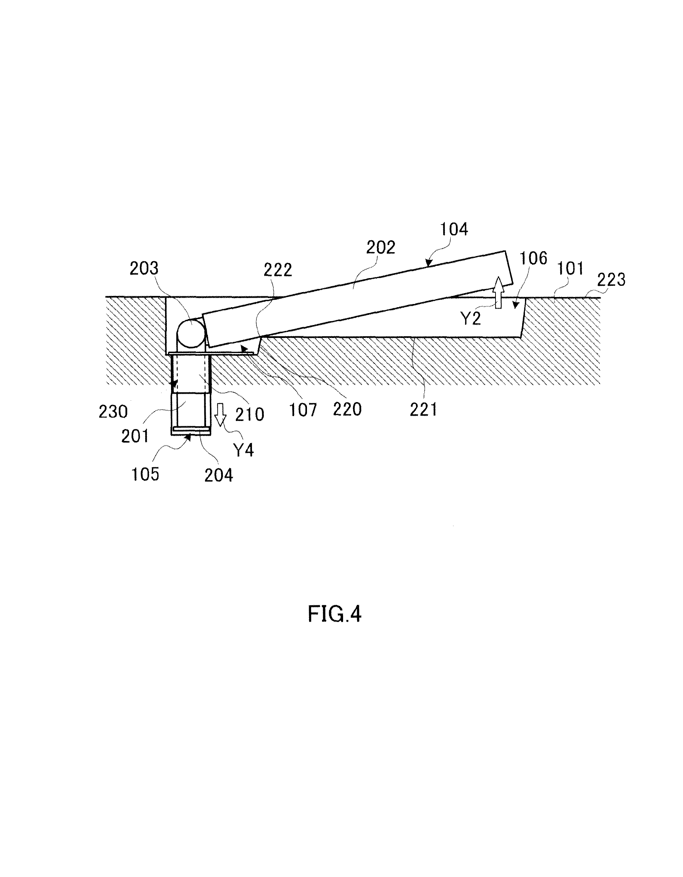

FIG.4 is a cross-sectional view through line B-B of FIG.3.

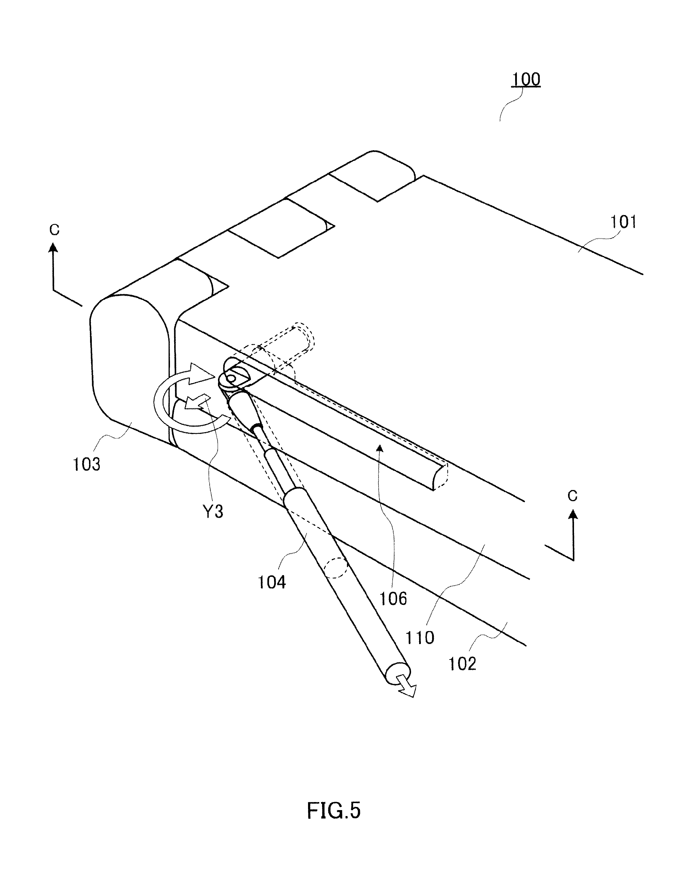

FIG.5 is a perspective view of the principal parts of mobile terminal 100 when the antenna is used according to an embodiment of the present invention.

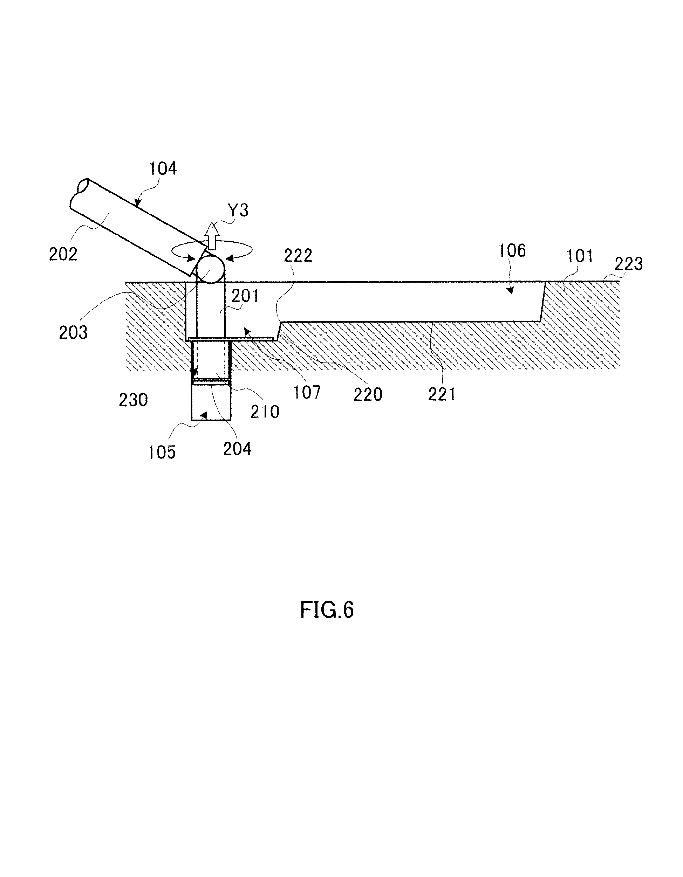

FIG.6 is a cross-sectional view through line C-C of FIG.5.

Mobile terminal 100 mainly comprises first housing 101, second housing 102, third housing 103, antenna 104, first antenna storing section 105, second antenna storing section 106, and cavity section 107.

The configuration elements are described in detail below using FIG.1 through FIG.6.

First housing 101 is attached to third housing 103, so as to be able to pivot with respect to third housing 103, by means of a hinge section (not shown) provided in third housing 103. First housing 101 has first antenna storing section 105, second antenna storing section 106, and cavity section 107 in side surface section 110.

Second housing 102 is attached to third housing 103, so as to be able to pivot with respect to third housing 103, by means of a hinge section (not shown) provided in third housing 103.

Third housing 103 has a hinge section (not shown), and connects first housing 101 and second housing 102 in a mutually pivotable fashion via the hinge section.

Antenna 104 is a whip antenna, for example, and comprises antenna base section 201, antenna extending section 202 that extends from antenna base section 201, and hinge section 203 (see FIG.2, FIG.4, or FIG.6). Antenna extending section 202 of antenna 104 can be folded with respect to antenna base section 201 from hinge section 203. When antenna 104 is stored, antenna base section 201 is stored in first antenna storing section 105, and antenna extending section 202 is stored in second antenna storing section 106, as shown in FIG.1 and FIG.2. When antenna 104 is taken out, antenna extending section 202 is moved away from bottom surface section 221 of second antenna storing section 106, as shown in FIG.3 and FIG.4. When antenna 104 is used, hinge section 203 projects outward from first housing 101, and antenna extending section 202 becomes pivotable about hinge section 203 outside first housing 101, as shown in FIG.5 and FIG.6. The method of taking out antenna 104 will be described later herein.

First antenna storing section 105 is provided in first housing 101, and has guide section 210 attached to it. First antenna storing section 105 stores antenna base section 201 in a state in which antenna base section 201 can slide in the vertical direction in FIG.2, FIG.4, or FIG.6.

Second antenna storing section 106 is provided in side surface section 110 of first housing 101 in the lengthwise direction of first housing 101, and stores antenna extending section 202. Second antenna storing section 106 is formed so that its lengthwise direction (the horizontal direction in FIG.2, FIG.4, or FIG.6) is perpendicular to the lengthwise direction of first antenna storing section 105 (the vertical direction in FIG.2, FIG.4, or FIG.6).

Cavity section 107 is provided in first housing 101. Cavity section 107 is provided between first antenna storing section 105 and second antenna storing section 106. As shown in FIG.2, FIG.4, or FIG.6, cavity section 107 is formed as a recess in the vicinity of hinge section 203 of bottom surface section 221 of second antenna storing section 106. Around cavity section 107 is formed side wall section 220, which is an inclined surface forming cavity section 107.
Fulcrum section 222 (a wall section) is formed by the intersection of side wall section 220 and bottom surface section 221.

The configuration of antenna 104 will now be described in detail using FIG.1 through FIG.6.

Antenna base section 201 can be folded with respect to antenna extending section 202 from hinge section 203, and is connected to antenna extending section 202 via hinge section 203. Antenna base section 201 slides inside first antenna storing section 105 and inside cavity section 107. Also, antenna base section 201 slides inside through-hole 230 formed in guide section 210, and stops at a desired position by pressing against the inner wall section of through-hole 230. For example, antenna base section 201 forms a plurality of contacting areas for which elastic deformation is possible in a direction perpendicular to the sliding direction of antenna base section 201 at a position at which antenna base section 201 comes into contact with the inner wall section of through-hole 230, and stops at a desired position through a formed contacting area pressing against the inner wall section of through-hole 230. Also, antenna base section 201 has flange section 204 at the bottom. When antenna 104 is taken out, antenna base section 201 is positioned lower than when antenna 104 is stored (see FIG.2 and FIG.4), and when antenna 104 is used, antenna base section 201 is positioned higher than when antenna 104 is stored (see FIG.2 and FIG.6).

Antenna extending section 202 can be folded with respect to antenna base section 201 from hinge section 203, and is connected to antenna base section 201 via hinge section 203. When antenna 104 is stored, antenna extending section 202 is stored in second antenna storing section 106, and does not project from outer surface section 223 of first housing 101 (see FIG.2). Also, when antenna 104 is stored, the hinge section 203 side of antenna extending section 202 is positioned above cavity section 107. When antenna 104 is taken out, the hinge section 203 side of antenna extending section 202 is positioned in cavity section 107 and comes into contact with fulcrum section 222 (see FIG.4). When antenna 104 is used, antenna extending section 202 projects outside first housing 101, and can pivot about hinge section 203 in any direction (see FIG.6). As shown in FIG.5, antenna extending section 202 can be extended and retracted, being used in an extended state, and stored in second antenna storing section 106 in a retracted state.

Hinge section 203 connects antenna base section 201 and antenna extending section 202 in a mutually foldable and pivotable fashion. Hinge section 203 is positioned in second antenna storing section 106 when antenna 104 is stored (see FIG.2), is positioned in cavity section 107 when antenna 104 is taken out (see FIG.4), and projects from first housing 101 and is positioned outside first housing 101 when antenna 104 is used (see FIG.6). Thus, when antenna 104 is stored or taken out, antenna extending section 202 can be pivoted with respect to antenna base section 201 in the vertical direction in FIG.2 or FIG.4, and when antenna 104 is used, antenna extending section 202 can be pivoted with respect to antenna base section 201 in any direction.

Flange section 204 is attached to the bottom of antenna base section 201, and prevents antenna base section 201 becoming detached from first antenna storing section 105. That is to say, when antenna 104 is used, flange section 204 presses against the bottom of guide section 210 provided in first antenna storing section 105, limiting the upward movement of antenna base section 201.

The method of taking out antenna 104 from first housing 101 when antenna 104 is stored in first housing 101 will now be described using FIG.1 through FIG.6.

First, in a state in which antenna 104 is stored in first housing 101 (the state shown in FIG.2), the hinge section 203 side of antenna extending section 202 is pressed in the downward direction of FIG.2 (in the direction indicated by arrow Y1 in FIG.1 and FIG.2).

Consequently, antenna base section 201 and hinge section 203 slide in the downward direction of FIG.2, and the hinge section 203 side of antenna extending section 202 comes into contact with fulcrum section 222.

When antenna extending section 202 is pressed further in the direction indicated by arrow Y1 in this state, antenna base section 201 and hinge section 203 slide further in the downward direction of FIG.2 (the Y4 direction in FIG.3 and FIG.4), and part of antenna extending section 202 moves into cavity section 107. Along with this, antenna extending section 202 comes into contact with fulcrum section 222, and pivots about fulcrum section 222 in the counterclockwise direction in FIG.4 (the direction indicated by arrow Y2 in FIG.3 and FIG.4). Consequently, as shown in FIG.4, antenna extending section 202 moves away from bottom surface section 221 of first housing 101 and projects from first housing 101, and it becomes possible to pull antenna extending section 202 upward with a finger.

Next, by pulling antenna extending section 202 upward, antenna base section 201 and hinge section 203 slide upward (in the direction indicated by arrow Y3 in FIG.5 and FIG.6), and hinge section 203 projects outside first housing 101. By this means it becomes possible to turn antenna extending section 202 in a desired direction, and a good reception state can be established for a wave of a desired frequency to be received by antenna 104.

The method of storing antenna 104 in first housing 101 when antenna 104 has been taken out from first housing 101 and used will now be described using FIG,1 through FIG.6.

First, in a state in which antenna 104 has been taken out from first housing 101 and used (the state shown in FIG.6), antenna extending section 202 is moved to a position above second antenna storing section 106 by pivoting antenna extending section 202 about hinge section 203.

Next, the tip of antenna extending section 202 is stored in second antenna storing section 106 by pressing antenna extending section 202 in the downward direction of FIG.4. By pressing antenna extending section 202 further in the downward direction of FIG.4, antenna base section 201 and hinge section 203 slide inside first antenna storing section 105. By this means, antenna extending section 202 is stored in second antenna storing section 106, antenna base section 201 is stored in first antenna storing section 105, and storing of antenna 104 in first housing 101 is completed.

Thus, according to this embodiment, through the provision of a cavity section between a first antenna storing section and a second antenna storing section, when the antenna is taken out, an antenna extending section moves into the cavity section, pivots about a fulcrum section of the housing, and moves away from the housing, enabling an antenna stored in the housing to be taken out easily, with no loss of design quality. Also, according to this embodiment, it is only necessary to form a concave cavity section, making a complicated mechanism or structure for taking out the antenna unnecessary, and enabling an easy-to-use mobile terminal to be provided without increasing the manufacturing cost of the mobile terminal.

In the above embodiment, a case has been described in which a whip antenna is stored in a housing, but the present invention is not limited to this, and can also be applied to cases in which not only a whip antenna, but any kind of antenna, is taken out from a housing. Also in the above embodiment, an antenna storing section is provided in a side surface section of a housing, but the present invention is not limited to this, and an antenna storing section can be provided, not only in a side surface section of a housing, but in any position, such as a rear surface, on a housing. Furthermore, in the above embodiment, the width and depth of a cavity section provided in a housing can be modified as appropriate according to the length of the antenna.

The disclosure of Japanese Patent Application No.2009-14524, filed on January 26, 2009, including the specification, drawings and abstract, is incorporated herein by reference in its entirety.

### Industrial Applicability

The present invention is particularly suitable for storing an antenna in a housing in a folded state, and can be applied to a mobile phone, PDA, portable game machine, communication terminal, notebook PC, or the like, or an antenna apparatus externally connected to these devices.

## Claims

1. A mobile terminal comprising:
a housing;
an antenna having an antenna base section and an antenna extending section that extends from the antenna base section;
a first antenna storing section that is provided in the housing and stores the antenna base section;
a second antenna storing section that is provided in the housing and stores the antenna extending section; and
a cavity section that is provided between the first antenna storing section and the second antenna storing section of the housing.

2. The mobile terminal according to claim 1, wherein:
the antenna base section can slide inside the first antenna storing section; and
a part of the antenna extending section, when the antenna base section slides in a state in which the antenna extending section is stored in the second antenna storing section, moves to the cavity section and comes into contact with a wall section of the housing, and also moves away from the second antenna storing section by pivoting about the wall section.

3. The mobile terminal according to claim 1, wherein the antenna further comprises a hinge section that enables the antenna extending section to be folded with respect to the antenna base section, and that can project from the housing.

4. A mobile terminal comprising:
a housing;
an antenna having a hinge section on a base part; and
an antenna storing section that is provided in the housing and stores the antenna folded from the hinge section, wherein a recess is provided in the vicinity of the hinge section of a bottom surface of the antenna storing section.
